# EUROPÄISCHE PATENTSCHRIFT

(11) **EP 0 894 817 B1**
(45) Veröffentlichungstag und Bekanntmachung des Hinweises auf die Patenterteilung: **07.04.2004**
(21) Anmeldenummer: 98113970.2
(22) Anmeldetag: 25.07.1998
(51) Int. Cl.: C08J 9/228, C08J 9/20

(54) **Schaumstoff-Formteile für die Lebensmittelverpackung**
Foamed articles for food packaging
Articles de mousse pour l'emballage de produits alimentaires

(30) Priorität: 02.08.1997 DE 19733535
(43) Veröffentlichungstag der Anmeldung: 03.02.1999
(73) Patentinhaber: BASF AKTIENGESELLSCHAFT, 67056 Ludwigshafen (DE)
(72) Erfinder: Glück, Guiscard, Dr., 55129 Mainz (DE); Hahn, Klaus, Dr., 67281 Kirchheim (DE); Mc Kee, Graham Edmund, Dr., 67433 Neustadt (DE); Wünsch, Josef Richard, Dr., 67105 Schifferstadt (DE); Fischer, Wolfgang, Dr., 69190 Walldorf (DE); Gausepohl, Hermann, Dr., 67112 Mutterstadt (DE)

(56) Entgegenhaltungen:
- EP-A- 0 071 717
- EP-A- 0 530 796

## Beschreibung

Die Erfindung betrifft die Verwendung von expandierbaren Styrolpolymerisat-Partikeln (EPS) zur Herstellung von Schaumstoff-Formteilen für die Verpackung von Lebensmitteln.

Schaumstoff-Formteile auf EPS-Basis werden in großem Maßstab für die Verpackung von Lebensmitteln eingesetzt, beispielsweise als Fischkisten, Tortenverpackungen, Fleischschalen und Isolierkisten für "Essen auf Rädern".

Bei der herkömmlichen Herstellung von Polystyrol-Partikeln durch radikalisch initiierte Polymerisation von Styrol in wässriger Suspension verbleiben immer geringe Restmengen von Styrol im Polymerisat. Will man bei dem herkömmlichen Verfahren einen wesentlich niedrigeren Reststyrolgehalt, z.B. unter 100 ppm, einstellen, so ist dies nur mit einem erheblichen Aufwand möglich, beispielsweise mit extrem langen Zykluszeiten der Polymerisation in Verbindung mit zusätzlichen Verfahrensschritten, wie Extraktion oder Entgasung.

Nun ist zwar umstritten ob und in welchem Maße geringe Mengen Styrol toxisch sind, die Bereitstellung von Schaumstoff-Formteilen mit extrem niedrigem Reststyrolgehalt für die Lebensmittelverpackung ist jedenfalls sehr erwünscht.

Es wurde nun gefunden, daß durch anionische Dispersionspolymerisation hergestellte Polystyrolpartikel mit einem definierten Gehalt an Treibmittel einen extrem niedrigen Reststyrolgehalt aufweisen und zu Schaumstoff-Formteilen verarbeitbar sind.

Gegenstand der Erfindung ist demzufolge die Verwendung von expandierbaren Styrolpolymerisat-Partikeln, die 3 bis 10 Gew.-% eines aliphatischen Kohlenwasserstoff-Treibmittels enthalten, zur Herstellung von Schaumstoff-Formteilen für die Verpackung von Lebensmitteln durch Verschäumen und Versintern der expandierbaren Partikel, wobei die Partikel durch anionische Dispersionspolymerisation von Styrol in dem Kohlenwasserstoff-Treibmittel in Gegenwart eines Blockcopolymeren als Dispergierhilfsmittel hergestellt wurden, einen mittleren Partikeldurchmesser zwischen 100 und 2000 µm und einen Reststyrolgehalt von weniger als 30 ppm aufweisen.

Die anionische Dispersionspolymerisation von Styrol in einem aliphatischen Kohlenwasserstoff, z.B. Pentan, als Dispergiermittel und einem Styrol-Dien-Zwei- bzw. Dreiblockcopolymeren als Dispergierhilfsmittel sind aus der DE-A 44 44 016 bzw. der DE-A 195 07 777 bekannt. Dabei entstehen filtrierbare Polystyrolpartikel, die eine besonders enge Molekulargewichtsverteilung aufweisen. Von der Verwendung dieser Partikel zur Herstellung von Schaumstoff-Formteilen ist nicht die Rede; in den Beispielen ist ein Umsatz von über 99 % genannt.

Die erfindungsgemäß zu verwendenden expandierbaren Styrolpolymerisat-Partikel werden durch die an sich bekannten und z.B. in DE-A 44 44 016 und DE-A 195 07 777 ausführlich beschriebene anionische Dispersionspolymerisation hergestellt. Bevorzugt ist die Polymerisation von Styrol allein, mit dem Styrol können aber auch untergeordnete Mengen üblicher Comonomerer, wie Acrylnitril, Butadien, Divinylbenzol, Diphenylethen und Vinylpyrrolidon copolymerisiert werden. Die als Dispergiermittel eingesetzten aliphatischen Kohlenwasserstoffe sind identisch mit dem später die Expansion bewirkenden Treibmittel. Bevorzugt ist ein aliphatischer Kohlenwasserstoff mit 4 bis 8 C-Atomen, insbesondere Pentan, sowie Mischungen von Pentan mit untergeordneten Mengen Hexan, Heptan oder Octan. Als Initiatoren dienen die bekannten Lithiumorganischen Verbindungen, bevorzugt ist sec.-Butyllithium. Geeignete Dispergierhilfsmittel sind Blockcopolymere, z.B. Styrol-Dien-Styrol- oder Styrol-tert.Butylstyrol-Blockcopolymere. Bevorzugt sind Styrol-Butadien-, Styrol-Butadien-Styrol- und Styrol-Isopren-Blockcopolymere, die gegebenenfalls hydriert sein können. Die eingesetzte Dispersion enthält vorzugsweise 0,1 bis 20 Gew.-% des Dispergierhilfsmittels, sowie 10 bis 60 Gew.-% Styrol. Die Polymerisationstemperatur kann zwischen 30 und 100°C betragen. Die Polymerisation wurde durch Zugabe von Alkoholen, wie z.B. Methanol, abgebrochen. Weitere Einzelheiten können der DE-A 195 07 777 entnommen werden. Nach beendeter Polymerisation werden die Polystyrolpartikel vom Dispergiermittel z.B. durch Filtration abgetrennt. Sie enthalten dann immer noch erhebliche Mengen an Kohlenwasserstoff, im allgemeinen bis zu etwa 30 Gew.-%. Durch gezielte Trocknung, z.B. durch Heißluft oder mittels eines zweiwelligen, sich selbst reinigenden vertikalen Reaktors werden sie auf einem Treibmittelgehalt von 1 bis 15, vorzugsweise von 3 bis 10 Gew.-% gebracht. Die derart hergestellten expandierbaren Styrolpolymerisat-Partikel weisen einen Reststyrolgehalt von weniger als 30 ppm, vorzugsweise von weniger als 20 ppm und insbesondere von weniger als 15 ppm auf. Sie haben eine sehr enge Partikelgrößenverteilung, ihr mittlerer Durchmesser liegt zwischen 100 und 2000 µm, insbesondere zwischen 200 und 800 µm.

Das Molekulargewicht der Styrolpolymerisate liegt im allgemeinen zwischen 5.000 und 1.000.000 g/mol vorzugsweise zwischen 50.000 und 500.000 g/mol bei enger Molekulargewichtsverteilung. Aufgrund dieser hohen Molekulargewichte können aus den expandierbaren Partikeln Formteilen mit besonders guten mechanischen Eigenschaften hergestellt werden.

Die Herstellung von Schaumstoff-Formteilen aus den expandierbaren Partikeln erfolgt durch übliches Vorschäumen und Versintern in nicht gasdicht schließenden Formen.

### Beispiel 1

20,475 g eines Styrol-Butadien-Styrol-Dreiblockcopolymeren (Kraton G 1651 der Fa. Shell Chemicals) wurden als Dispergiermittel unter Inertgas in 819 g Styrol gelöst, und diese Mischung wurde in 1521 g n-Hexan eingerührt. Alle Verunreinigungen wurden mit sec.-Butyllithium austitriert, anschließend wurde die Polymerisation bei 26°C durch Zugabe von 4,81 mmol sec.-Butyllithium gestartet. Die Temperatur der Reaktionsmischung wurde nach exothermer Reaktion auf 63°C einreguliert und die Reaktion für 3,0 Stunden bei dieser Temperatur belassen. Zum Abbruch der Reaktion wurde iso-Propanol im Überschuß (10 ml) zugegeben. Die erhaltenen Polystyrolperlen wurden anschließend von der flüssigen Phase abgetrennt. Der verbleibende Anteil an n-Hexan in den Perlen wurde durch gezielte Trocknung mittels Heißluft von 40°C auf etwa 8 Gew.-% eingestellt. Die so erhaltenen Perlen hatten eine mittlere Teilchengröße von 700 µm. Das Molekulargewicht Mw betrug 220 000 g/mol. Der Reststyrolgehalt lag bei 10 ppm. Die so erhaltenen Rohperlen wurden mit Wasserdampf zu Schaumperlen mit einer Schüttdichte von 18 g/l aufgeschäumt. Aus diesen Schaumperlen wurden in herkömmlichen Formteil-Automaten Formteile hergestellt.

### Beispiel 2

Wie Beispiel 1, jedoch wurde statt n-Hexan n-Pentan verwendet. Die erhaltenen Perlen hatten eine mittlere Teilchengröße von 900 µm. Der Reststyrolgehalt lag bei 10 ppm. Der in den Perlen verbleibende Pentangehalt wurde durch gezielte Trocknung auf etwa 5 Gew.-% eingestellt. Die so erhaltenen Rohperlen konnten analog Beispiel 1 zu Schaumstofformteilen weiterverarbeitet werden.

### Beispiel 3

In einem 10 l fassenden Rührkessel wurden 1820 g Styrol und 46 g eines olefinisch hydrierten Styrol/Isopren-Blockpolymeren vorgelegt. Das Blockcopolymere besaß ein mittleres Molekulargewicht von 140.000 g/mol und einen Styrolgehalt von 36 %. Anschließend wurden 137 g n-Octan und 2593 g n-Pentan (Verhältnis 1:19) zugegeben und die Mischung auf 45°C erhitzt. Die Polymerisation wurde durch Zugabe von 8 ml einer 1,5 molaren Lösung von s-Butyllithium in Cyclohexan gestartet. Nach einer Minute war die Reaktionsmischung trübe. Binnen 10 min stieg die Temperatur in dem Rührkessel auf 75°C. Nach 20 Minuten war die Temperatur wieder auf 63°C gefallen. Bei dieser Temperatur wurde die Reaktionsmischung weitere 2 Stunden gerührt, anschließend mit 1 ml Ethanol versetzt, abgekühlt und abgelassen. Die erhaltene Suspension war homogen; an Kessel und Rührer waren keine Ablagerungen. Der Reststyrolgehalt der Lösung betrug 12 ppm. Eine isolierte Probe besaß ein gewichtsmittleres Molekulargewicht M_{w} von 175.000 g/mol und eine Breite der Verteilung M_{w}/M_{N} = 1,04. Die in Pentan dispergierte Suspension besaß eine mittlere Teilchengröße von 780 µm. Das in den Perlen verbleibende Treibmittel wurde durch gezielte Trocknung auf etwa 5 Gew.-% eingestellt. Die so erhaltenen Rohperlen konnten analog Beispiel 1 zu Schaumstofformteilen weiterverarbeitet werden.

## Patentansprüche

1. Verwendung von expandierbaren Styrolpolymerisat-Partikeln, die 3 bis 10 Gew.-% eines aliphatischen Kohlenwasserstoff-Treibmittel enthalten, zur Herstellung von Schaumstoff-Formteilen für die Verpackung von Lebensmitteln durch Verschäumen und Versintern der expandierbaren Partikel, **dadurch gekennzeichnet, daß** die Partikel durch anionische Dispersionspolymerisation von Styrol in dem Kohlenwasserstoff-Treibmittel in Gegenwart eines Blockcopolymeren als Dispergierhilfsmittel hergestellt wurden, einen mittleren Partikeldurchmesser zwischen 100 und 2000 µm und einen Reststyrolgehalt von weniger als 30 ppm aufweisen.

2. Verwendung der expandierbaren Styrolpolymerisat-Partikel nach Anspruch 1, **dadurch gekennzeichnet, daß** bei der anionischen Dispersionspolymerisation Pentan als Kohlenwasserstoff und ein Styrol-Butadien-Styrol-Dreiblockcopolymer als Dispergiermittel eingesetzt wurde.

3. Verwendung der expandierbaren Styrolpolymerisat-Partikel nach Anspruch 1, **dadurch gekennzeichnet, daß** bei der anionischen Dispersionspolymerisation eine Mischung von Pentan mit untergeordneten Mengen Hexan, Heptan oder Octan als Treibmittel eingesetzt wurde.

## Claims

1. The use of expandable styrene polymer particles which comprise from 3 to 10% by weight of an aliphatic hydrocarbon blowing agent, for producing foam moldings for the packaging of food or drink, via foaming and sintering of the expandable particles, wherein the particles were produced via anionic dispersion polymerization of styrene in the hydrocarbon blowing agent in the presence of a block copolymer as dispersing agent, and have an average particle diameter of from 100 to 2 000 µm, and have a residual styrene content of less than 30 ppm.

2. The use of the expandable styrene polymer particles as claimed in claim 1, wherein, during the anionic dispersion polymerization, the hydrocarbon used comprised pentane, and the dispersing agent used comprised a styrene-butadiene-styrene three-block copolymer.

3. The use of the expandable styrene polymer particles as claimed in claim 1, wherein, during the anionic dispersion polymerization, the blowing agent used comprised a mixture of pentane with subordinate amounts of hexane, heptane, or octane.

## Revendications

1. Utilisation de particules de polymère de styrène expansibles, qui contiennent 3% à 10% en poids d'un agent moussant d'hydrocarbure aliphatique, pour la préparation de pièces en mousse moulées pour l'emballage de produits alimentaires au moyen d'une transformation en mousse et d'un frittage des particules expansibles, **caractérisée en ce que** les particules ont été préparées au moyen d'une polymérisation en dispersion anionique de styrène dans l'agent moussant d'hydrocarbure en présence d'un copolymère séquencé en tant qu'agent dispersant, et qu'elles présentent un diamètre moyen des particules compris entre 100 µm et 2000 µm et une teneur en styrène résiduel inférieure à 30 ppm.

2. Utilisation des particules de polymère de styrène expansibles selon la revendication 1, **caractérisée en ce que** l'on met en oeuvre, lors de la polymérisation en dispersion anionique, le pentane en tant qu'hydrocarbure et un copolymère triséquencé styrène/butadiène/styrène en tant qu'agent dispersant.

3. Utilisation des particules de polymère de styrène expansibles selon la revendication 1, **caractérisée en ce que** l'on met en oeuvre, lors de la polymérisation en dispersion anionique, un mélange de pentane, avec des quantités mineures d'hexane, d'heptane et d'octane en tant qu'agent moussant.
